# EUROPEAN PATENT APPLICATION

(11) **EP 4 571 904 A1**
(43) Date of publication of application: **18.06.2025**
(21) Application number: 24204338.8
(22) Date of filing: 02.10.2024
(51) Int. Cl.: H01M 8/04111, H01M 8/04119, H01M 8/10, H01M 8/04014, H01M 8/04089

(54) **FUEL CELL WATER RECOVERY SYSTEM**

(30) Priority: 14.12.2023 US 202318540397
(71) Applicant: Honeywell UK Limited, Bracknell RG12 1EB (GB)
(72) Inventor: WHITE, Christopher James, Charlotte, 28202 (US); KNOB, Martin, Charlotte, 28202 (US); LUDVIK, Jan, Charlotte, 28202 (US)
(74) Representative: Haseltine Lake Kempner LLP

(57) **Abstract**

In some examples, a water recovery system is configured to extract water from an exhaust of a fuel cell assembly. The water recovery system includes a condenser configured to transfer heat from the exhaust, an extractor configured to extract water from the exhaust, and a turbine configured to extract energy from the exhaust. The condenser is configured to transfer the heat to a turbine exhaust of the turbine and provide the exhaust to the extractor. The extractor is configured to provide the exhaust to the turbine. In examples, a compressor is configured to compress the exhaust prior to the heat transfer by the condenser.

## Description

### TECHNICAL FIELD

The present disclosure relates to a water recovery system for a fuel cell.

### STATEMENT REGARDING FEDERALLY SPONSORED RESEARCH OR DEVELOPMENT

This invention was made with Government Support under Contract No. 101101967 awarded by (UK ATI) - United Kingdom - Aerospace Technologies Institute/UKRI (Innovate UK). The Government has certain rights in the invention.

### BACKGROUND

A fuel cell system generally includes one or more fuel cells assembled to form a fuel cell stack. The fuel cell stack normally includes an anode side, a cathode side, and one or more membranes separating the anode side and the cathode side. The fuel cell system is typically configured to receive a fuel on the anode side and an oxidizing agent on the cathode side. During operation of the fuel cell stack, protons originating from the fuel migrate through the membranes from the anode side and react at the cathode side with the oxidizing agent. Commonly the proton is a hydrogen ion and the oxidizing agent comprises oxygen. The hydrogen ion and the oxygen may combine at the cathode side, resulting in the generation of electric power and the production of water. The water may be exhausted from the fuel cell system as a cathode exhaust. Some portion of the water may diffuse back across the membranes and be exhausted from the fuel cell system as an anode exhaust.

### SUMMARY

The present disclosure describes a water extraction system configured to extract water from an exhaust flow of a fuel cell assembly. In examples, the fuel cell assembly is configured to receive a fuel comprising hydrogen (e.g., H2, a hydrocarbon, or some other molecule including hydrogen) and an oxidizing agent comprising oxygen (e.g., 02, air, or some other molecule comprising oxygen). The fuel cell assembly is configured to generate electrical power using the fuel and the oxidizing agent and discharge an anode exhaust from an anode side and a cathode exhaust from a cathode side.

The water extraction system is configured to receive an exhaust flow (e.g., the cathode exhaust) from the fuel cell assembly and provide the exhaust flow to a condenser. The condenser is configured to transfer heat from the exhaust flow to a turbine exhaust of a turbine, causing condensation of water comprising the exhaust flow from a vapor phase to a liquid phase. Following the condensation, an extractor separates the liquid phase and discharges a dehumidified exhaust flow. The turbine extracts energy from the dehumidified exhaust flow and discharges the turbine exhaust to the condenser, such that the condenser may transfer the heat from the exhaust flow to the turbine exhaust. In examples, the water extraction system is configured to transfer heat from the exhaust flow to the dehumidified exhaust flow prior to the exhaust flow entering the condenser, such that the turbine may recapture at least some portion of the energy transferred from the exhaust flow to cause the condensation. In some examples, the water extraction system includes a compressor configured to increase a pressure of the exhaust flow. The turbine may provide some portion of the energy extracted from the dehumidified exhaust flow to the compressor.

In an example, a system comprises: a fuel cell assembly configured to receive an inlet feed at a fuel cell inlet and discharge an exhaust flow at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent; a condenser configured to receive the exhaust flow, wherein the condenser is configured to transfer heat from the exhaust flow and discharge a cooled exhaust flow; an extractor configured to receive the cooled exhaust flow, wherein the extractor is configured to extract water from the cooled exhaust flow and discharge a dehumidified exhaust flow; and a turbine configured to extract energy from the dehumidified exhaust flow and discharge a turbine exhaust to the condenser, wherein the condenser is configured to transfer the heat from the exhaust flow to the turbine exhaust.

In an example, a system comprises: a motor-driven compressor configured to provide an inlet feed; a fuel cell assembly configured to receive an inlet feed at a fuel cell inlet and discharge an exhaust flow at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent; a shaft-driven compressor configured to receive the exhaust flow, wherein the shaft-driven compressor is configured to compress the exhaust flow and discharge a pressurized exhaust flow having a pressure greater than the exhaust flow, and wherein the shaft-driven compressor is configured to compress the exhaust flow using a shaft power received from a shaft; a reheater configured to cause a first heat transfer from the pressurized exhaust flow; a condenser configured to receive the pressurized exhaust flow from the reheater, wherein the condenser is configured to cause a second heat transfer from the pressurized exhaust flow received from the reheater, and wherein the condenser configured to discharge a cooled exhaust flow; an extractor configured to receive the cooled exhaust flow, wherein the extractor is configured to extract water from the cooled exhaust flow and discharge a dehumidified exhaust flow, wherein the system is configured to discharge at least some portion of the extracted water to the inlet feed, and wherein the reheater is configured to receive the dehumidified exhaust flow and transfer heat from the pressurized exhaust flow to the dehumidified exhaust flow to cause the first heat transfer; and a turbine configured to receive the dehumidified exhaust flow from the reheater and provide a turbine exhaust, wherein the turbine exhaust comprises at least some portion of the dehumidified exhaust flow received from the reheater, wherein the turbine is configured to provide the shaft power to the shaft using the dehumidified exhaust flow received from the reheater, and wherein the condenser is configured to receive the turbine exhaust and transfer heat from the pressurized exhaust flow to the turbine exhaust to cause the second heat transfer.

In an example, a method comprises: receiving, by a fuel cell assembly, an inlet feed at a fuel cell inlet, wherein the inlet feed comprises one of an oxidizing agent or a fuel, and wherein the fuel cell assembly is configured to oxidize the fuel using the oxidizing agent; discharging, by the fuel cell assembly, an exhaust flow at a fuel cell outlet fluidically coupled to the fuel cell inlet; transferring heat, using a condenser, from the exhaust flow to a turbine exhaust of a turbine and discharging, from the condenser, a cooled exhaust flow comprising at least a portion of the exhaust flow; extracting water, using an extractor, from the cooled exhaust flow and discharging a dehumidified exhaust flow comprising at least a portion of the cooled exhaust flow; and extracting energy, using a turbine, from the dehumidified exhaust flow and discharging, from the turbine, the turbine exhaust to the condenser, wherein the turbine exhaust comprises at least a portion of the dehumidified exhaust flow.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a schematic illustration of an example fuel cell system.
FIG. 2 is a schematic illustration of an example water extraction system of a fuel cell system.
FIG. 3 is a schematic illustration of an example water extraction system including a compressor.
FIG. 4 is a schematic illustration of a water extraction system receiving a cathode exhaust of a fuel cell system.
FIG. 5 is a flow diagram illustrating an example method of extracting water from an exhaust of a fuel cell system.

### DETAILED DESCRIPTION

Fuel cell assemblies in a fuel cell system typically provide electrical power by enabling the transfer of a charge-carrier ion between a fuel and an oxidizing agent. A fuel cell assembly may include a fuel cell stack comprising a membrane and/or electrolyte configured to transfer the charge-carrier ion between a cathode side of the fuel cell assembly and an anode side of the fuel cell assembly. The transfer of the charge-carrier ion between the cathode side and the anode side generates an electric potential between the anode side and the cathode side, which may be utilized to provide electrical power. In some fuel cell assemblies, the charge-carrier ion transfers from the cathode side to the anode side. In some fuel cell assemblies, a charge-carrier ion may transfer from the anode side to the cathode side.

The fuel cell assembly is generally configured to receive a flow of fuel and a flow of an oxidizing agent. For example, the fuel may comprise hydrogen (e.g., H2, a hydrocarbon, or some other molecule including hydrogen). The flow of oxidizing agent may comprise oxygen (e.g., 02, air, or some other molecule comprising oxygen). The charge-carrier ion is produced and transferred through the membrane and/or electrode as a first half of an oxidation-reduction (redox) reaction occurs at the cathode side and a second half of the redox reaction occurs at the anode side. As the fuel cell assembly receives the fuel and the oxidizing agent, the fuel cell assembly may provide electrical power to a distribution system of a building and/or a vehicle such as an automobile, an aircraft, a ship, and/or other vehicle, and/or other machines and/or devices configured to receive electrical power.

In some fuel cell assemblies, performance of the electrolyte and/or membrane is enhanced by keeping the electrolyte and/or membrane hydrated during fuel cell assembly operation. However, during certain operating conditions, the flow of fuel and/or the flow of oxidizing agent may not have a sufficient water content to provide sufficient hydration, and the fuel cell assembly performance may suffer. Consequently, many fuel cell systems provide humidification control to increase the water content of the oxidizing agent entering the fuel cell assembly.

During operation of the fuel cell assembly, the fuel cell assembly may discharge a cathode exhaust from the cathode side and an anode exhaust from the anode side as the fuel cell provides the electrical power. At least one of (and often both) the cathode exhaust and the anode exhaust include water produced as a reaction product of the redox reaction and/or present as a result of migration through the electrolyte and/or membrane. The fuel cell assembly disclosed herein is configured to extract water from at least one of the cathode exhaust and/or the anode exhaust and provide the water to at least one of the oxidizing agent and/or the fuel prior to enhance the operation of the fuel cell assembly.

In some examples, the fuel cell assembly is configured to receive the flow of oxidizing agent (e.g., at a cathode inlet) at a temperature greater than about 40 degree Celsius ("deg C"), such as a temperature of from about 50 deg C to about 90 deg C, and/or at a pressure greater than about 1.5 Bar, such as a pressure of about 2 Bar. The fuel cell assembly may be configured to receive the flow of fuel (e.g., at an anode inlet) at a temperature greater than about 25 deg C, such as a temperature of from about 35 deg C to about 90 deg C, and/or at a pressure greater than about 1.5. Bar, such as a pressure of about 2 Bar. The fuel cell assembly may be configured to discharge a first exhaust flow (e.g., a cathode exhaust) at a temperature greater than about 70 deg C, such as a temperature of from about 90 deg C to about 105 deg C and/or at a pressure greater than nout 1.5 Bar, such as a pressure of about 2 Bar. The fuel cell assembly may be configured to discharge a second exhaust flow (e.g., an anode exhaust) at a temperature greater than about 80 deg C, such as a temperature greater than about 100 deg C, and/or at a pressure greater than about 1.5 Bar, such as a pressure of about 2 Bar.

For example, in some examples, the fuel cell system disclosed includes a fuel cell assembly configured to receive a fuel comprising hydrogen at the anode side and an oxidizing agent comprising oxygen at the cathode side. The fuel cell assembly may generate water (H20) as a result of a reduction of H+ charge-carrier ions occurring at the cathode side and exhaust a significant portion of the water produced via the cathode exhaust. The fuel cell system may be configured to extract water from the cathode exhaust using a water extraction system. In examples, the fuel cell system is configured to provide some portion of the water extracted to the oxidizing agent to, for example, substantially maintain sufficient hydration of the fuel cell stack within the fuel cell assembly.

In examples, the water extraction system includes at least a condenser, a water extractor, and a turbine. The condenser is configured to transfer heat from an exhaust flow of the fuel cell system (e.g., a cathode exhaust and/or an anode exhaust) to condense water vapor comprising the exhaust flow to liquid water. The condenser is configured to transfer the heat using a turbine exhaust from the turbine as a coolant and discharge a cooled exhaust flow. The cooled exhaust flow exiting the condenser may have a reduced temperature and/or pressure relative to the exhaust flow entering the condenser, and/or have an increased fraction of liquid phase relative to the exhaust flow entering the condenser. The condenser is configured to discharge the cooled exhaust flow to an extractor.

The extractor is configured to substantially separate the liquid phase and the vapor phase of the cooled exhaust flow. The extractor is configured to discharge a water flow substantially comprising the liquid phase and a dehumidified exhaust flow substantially comprising the vapor phase. The water extraction system is configured to provide the provide the dehumidified exhaust flow to the turbine. The water extraction system may be configured to provide the water flow to a water distribution system, which may provide at least some portion of the water flow to an inlet feed of the fuel cell system.

The turbine is configured to extract energy from the dehumidified exhaust flow and discharge the turbine exhaust to the compressor. The turbine may substantially expand the dehumidified exhaust flow, such that the turbine exhaust exiting the turbine has a reduced temperature relative to the dehumidified exhaust flow entering the turbine (and, e.g., relative to the exhaust flow entering the condenser). Hence, the water extraction system may be configured to utilize the turbine exhaust to transfer heat from the exhaust flow within the condenser to cause the condensation of water vapor from the exhaust flow, avoiding the need for a separate coolant system to provide a coolant to the condenser.

In examples, the water extraction system includes a reheater configured to conduct an initial heat transfer from the exhaust flow prior to the exhaust flow entering the condenser. In examples, the reheater is configured to receive the dehumidified exhaust flow from the extractor and cause a heat transfer from the exhaust flow to the dehumidified exhaust flow. The reheater may be configured to discharge the thus heated dehumidified exhaust flow to the turbine. The transfer of heat from the exhaust flow to the dehumidified exhaust flow may increase a quality (e.g., a fraction of total mass in the vapor phase) of the dehumidified exhaust flow prior to its entry into the turbine. Hence, the water extraction system may be configured to utilize heat transferred from the exhaust flow to enhance a turbine power generated by the turbine as the turbine extracts energy from the dehumidified exhaust flow.

In examples, the water extraction system is configured to compress the exhaust flow (e.g., a cathode exhaust) discharged by the fuel cell assembly prior to conducting the water extraction. The water extraction system may include a compressor configured to receive the exhaust flow at an inlet pressure and discharge the exhaust flow at an outlet pressure greater than the inlet pressure. In examples, the outlet pressure is greater than an operating pressure of the fuel cell assembly (e.g., greater than a fuel cell exhaust discharging from the fuel cell assembly). The compressor may be configured to provide the thus pressurized exhaust flow to the condenser. The elevated pressure of the exhaust flow entering the condenser may increase a flow rate of the exhaust flow through the condenser and/or increase a density of the exhaust flow entering the condenser, increasing the heat transfer and condensation experienced by the exhaust flow as compared to an exhaust flow provided to the condenser at a lower pressure. For example, the thus pressurized exhaust flow may experience increased heat transfer and condensation within the condenser as compared that which might be experienced by an uncompressed exhaust flow discharged by the fuel cell assembly and substantially into the condenser without a compression to elevated pressure.

The turbine is configured to generate turbine power (e.g., a mechanical power) using the dehumidified exhaust flow. The water extraction system is configured to provide at least some portion of the turbine power to the compressor as compressor power. Hence, the water extraction system is configured to substantially recapture some portion of the compression power required to elevate the pressure of the exhaust flow following the water extraction. The turbine may be configured to exhaust a turbine exhaust having a reduced temperature and/or pressure relative pressurized exhaust flow and/or the dehumidified exhaust flow.

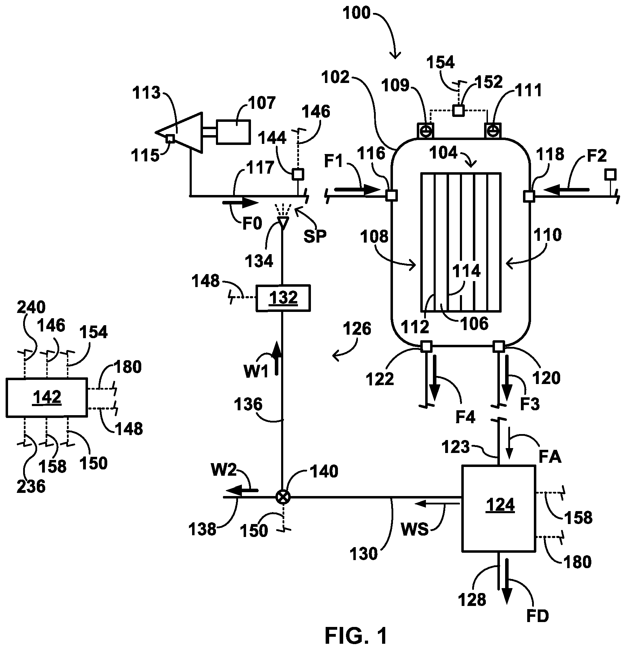

FIG. 1 is a schematic diagram of a fuel cell system 100 including a fuel cell assembly 102. Fuel cell assembly 102 includes fuel cell stack 104. Fuel cell stack 104 includes one or more fuel cells such as fuel cell 106. Fuel cell system 100 is configured to provide an first feed F1 to a first side 108 of fuel cell stack 104 and a second feed F2 to a second side 110 of fuel cell stack 104. Fuel cell stack 104 includes one or more fuel cells such as fuel cell 106. One or more fuel cells of fuel cell stack 104 (e.g., fuel cell 106) separates first side 108 and second side 110. Fuel cell 106 is configured to enable the transfer of a charge-carrier ion from first feed F1 to second feed F2, or vice-versa. Fuel cell stack 104 is configured to generate an electric potential (e.g., a voltage) from a first electrode 109 to a second electrode 111 as ions transfer across fuel cell 106 from first feed F1 to second feed F2, or vice-versa.

In examples, fuel cell 106 includes a proton exchange membrane (PEM), such as a solid polymer electrolyte proton conducting membrane. In some examples, fuel cell 106 is a solid oxide fuel cell, a molten carbonate fuel cell, a phosphoric acid fuel cell, an alkaline fuel cell, a direct methanol fuel cell, and/or another type of fuel cell. In examples, one of first feed F1 or second feed F2 includes an oxidizing agent and the other of first feed F1 or second feed F2 includes a fuel. In examples, one of first side 108 or second side 110 is a cathode side of fuel cell stack 104 and the other of first side 108 or second side 110 is an anode side of fuel cell stack 104.

In examples, fuel cell stack 104 is configured to ionize the fuel at one of the second side 110 or the first side 108 and enable travel of the resulting charge-carrier ions to the other of second side 110 or first side 108. One or more (e.g., each of) the fuel cells of fuel cell stack 104 may define a first cell electrode (e.g., one of an anode or a cathode) and a second cell electrode (e.g., the other of the anode or the cathode), such as first cell electrode 112 of fuel cell 106 and second cell electrode 114 of fuel cell 106. In examples, one or more of the first cell electrodes (e.g., each of) may be fluidically and electrically connected together to form and/or define first side 108. One or more of the second cell electrodes (e.g., each of) may be fluidically and electrically connected together to form and/or define second side 110. Fuel cell assembly 102 may include a first inlet 116 in fluidic communication with first side 108 and/or a second inlet 118 in fluidic communication with second side 110. First inlet 116 may be configured to channel and/or direct first feed F1 to cause fluidic communication of first feed F1 and first cell electrode 112. Second inlet 118 may be configured to channel and/or direct second feed F2 to cause fluidic communication of second feed F2 and second cell electrode 114.

Fuel cell system 100 may include a inlet compressor 113 configured to provide an inlet feed FO to at least one of first inlet 116 or second inlet 118. In examples, inlet feed FO comprises at least some portion of (e.g., substantially all) of first feed F1. In some examples, inlet feed FO comprises at least some portion of (e.g., substantially all) of second feed F2. Inlet compressor 113 may be configured to receive inlet feed FO at a first pressure and discharge the inlet feed at a second pressure greater than the first pressure. For example, inlet compressor 113 may be configured to receive inlet feed FO via a first compressor inlet 115 (e.g., at the first pressure) and discharge inlet feed FO (e.g., at the second pressure) to a pipe or other conduit 117 ("pipe 117"). Pipe 117 may be configured to convey inlet feed FO at the second pressure from inlet compressor 113 to at least one of first inlet 116 or second inlet 118. In some examples, inlet compressor 113 is configured to provide inlet feed FO at a second pressure greater than about 29 psi (200 kilopascals (kPa)), such as a pressure between about 29 psi and 43.5 psi (300 kPa).

In examples, inlet compressor 113 is configured to compress inlet feed FO using electrical power derived from the electric potential between first electrode 109 and second electrode 111. For example, inlet compressor 113 may be a motor-driven compressor including a motor 107. Motor 107 may be configured to receive electrical power and cause inlet compressor 113 to compress inlet feed FO using the electrical power. In examples, motor 107 is configured to receive at least some portion of the electrical power from fuel cell assembly 102.

In examples, inlet feed FO includes an oxidizing agent (e.g., 02, air, and/or some other molecule containing oxygen). Pipe 117 may be in fluidic communication with first inlet 116, such that inlet feed FO comprises at least some portion of (e.g., substantially all) of first feed F1. Fuel cell assembly 102 may be configured to oxidize some portion of a fuel received via second inlet 118 using the oxidizing agent of first inlet feed F1. Inlet compressor 113 may be configured to increase the pressure of inlet feed FO to increase a pressure of inlet feed F1 to, for example, increase the efficiency of fuel cell stack 104 when fuel cell stack 104 generates the electric potential from first electrode 109 to second electrode 111.

In some examples, fuel cell 106 includes a PEM configured to transfer a hydrogen ion (H+) between first side 108 and second side 110. For example, first cell electrode 112 may be a cathode of fuel cell 106 and second cell electrode 114 may be an anode of fuel cell 106. Fuel cell 106 may be configured to transfer H+ from the anode to the cathode. In examples, first side 108 is a cathode side of fuel cell stack 104. Second side 110 may be an anode side of fuel cell stack 104. In examples, first feed F1 includes diatomic oxygen (02) and second feed F2 includes diatomic hydrogen (H2), a hydrocarbon, or some other fuel including hydrogen.

Fuel cell assembly 102 may include a first exhaust 120 configured to discharge a first exhaust fluid F3 (e.g., when fuel cell assembly 102 generates an electric potential from a first electrode 109 to a second electrode 111). In examples, first exhaust fluid F3 includes a portion of first feed F1. For example, first exhaust fluid F3 may include one or more compounds comprising atoms introduced to fuel cell assembly 102 by first feed F 1, and/or one or more constituent compounds of first feed F1 which substantially pass through fuel cell assembly 102 to be discharged through first exhaust 120 via first exhaust fluid F3. In examples, first exhaust fluid F3 comprises water when fuel cell assembly 102 generates an electric potential (e.g., a voltage) from a first electrode 109 to a second electrode 111. In some examples, first feed F1 comprises oxygen (e.g., air) and second feed F2 comprises hydrogen (e.g., H2, a hydrocarbon, or some other molecule including hydrogen), and first exhaust fluid F3 comprises water, a portion of the oxygen (e.g., air) which entered fuel cell assembly 102 via first feed F1, nitrogen, and/or other components comprising first feed F1. In examples, first side 108 is a cathode side of fuel cell stack 104 and first exhaust fluid F3 is a cathode exhaust of fuel cell stack 104.

Fuel cell assembly 102 may include a second exhaust 122 configured to discharge a second exhaust fluid F4 (e.g., when fuel cell assembly 102 generates an electric potential from a first electrode 109 to a second electrode 111). In examples, second exhaust fluid F4 includes a portion of second feed F2. For example, second exhaust fluid F4 may include one or more compounds comprising atoms introduced to fuel cell assembly 102 by second feed F2, and/or one or more constituent compounds of second feed F2 which substantially pass through fuel cell assembly 102 to be discharged through second exhaust 122 via second exhaust fluid F4. In some examples, second feed F2 comprises hydrogen (e.g., H2, a hydrocarbon, or some other molecule comprising hydrogen) and second exhaust F4 comprises water, a portion of the hydrogen and/or hydrogen comprising molecule which entered fuel cell assembly 102 via second feed F2, carbon dioxide, nitrogen, and/or other components comprising second feed F2. In examples, second side 110 is an anode side of fuel cell stack 104 and second exhaust fluid F4 is an anode exhaust of fuel cell stack 104.

In some examples, during operation of fuel cell stack 104, protons originating from a hydrogen component of a fuel (e.g., second feed F2) supplied to an anode side (e.g., second side 110) migrate through one or more fuel cells such as fuel cell 106 and react at a cathode side (e.g., first side 108) with an oxidizing agent (e.g., an oxidizing agent provided by first feed F1). The hydrogen and oxygen combine (e.g., at the cathode side) to generate electrical power and produce a volume of water. A portion of the water may diffuse back through fuel cell 106 (e.g., through a membrane and/or electrolyte of fuel cell 106) to the anode side of the fuel cell stack. Fuel cell assembly 102 may be configured to discharge at least some portion of the water produced via first exhaust flow F3 and/or second exhaust flow F4. Hence, during operation of fuel cell assembly 102, water may be present in first exhaust flow F3 (e.g., a cathode exhaust) and/or second exhaust flow F4 (e.g., an anode exhaust).

Fuel cell system 100 is configured to extract water from one or more exhaust flows of fuel cell system 100 (e.g., one or more of first exhaust flow F3 and second exhaust flow F4) using a water extraction system 124. In examples, fuel cell system 100 is configured such that water extraction system 124 is in fluidic communication with at least one of first exhaust 120 and/or second exhaust 122. For example, water extraction system 124 may be configured to receive an exhaust FA from fuel cell assembly 102, where exhaust FA comprises one or more of first exhaust flow F3 and/or second cell exhaust flow F4. In examples, fuel cell system 100 includes a pipe or other conduit 123 ("pipe 123") configured to convey exhaust FA from fuel cell assembly 102 to water extraction system 124.

Water extraction system 124 is configured to extract water from exhaust FA and discharge the extracted water via water flow WS. Water extraction system 124 may be configured to discharge a discharge flow FD (e.g., via an exhaust discharge 128), with discharge FD comprising at least a portion of the exhaust flow less the extracted water (e.g., less water flow WS). In examples, water extraction system 124 is configured to increase a pressure of the exhaust flow prior to extracting the water from the exhaust flow. Increasing the pressure of the exhaust flow may improve a water removal efficiency of water extraction system 124 and/or increase a mass of water extracted from the exhaust flow.

In examples, fuel cell system 100 may be configured to provide discharge flow FD to one or more other systems, such as a cooling system, a pressurizing system, an environmental control system, and/or others. For example, when fuel cell system 100 is configured to provide electrical power to a distribution system of a building and/or vehicle such as an automobile, an aircraft, a ship, and/or other vehicle, fuel cell system 100 may be configured to provide discharge flow FD to one or more other systems of the building and/or the vehicle. In some examples, fuel cell system 100 is configured to exhaust discharge flow FD to an external environment outside of the building and/or vehicle.

As used herein, the term "water" refers to a fluid having a chemical formula H2O which may be in a vapor phase, a liquid phase, or a combination of the liquid phase and the vapor phase. The various components of fuel cell system 100 may be configured to alter the phase from vapor to liquid and vice-versa as fuel cell system 100 operates (e.g., as fuel cell system 100 generates the electric potential between first electrode 109 and second electrode 111). For example, water within first exhaust flow F3 and/or second exhaust flow F4 may be largely in the vapor phase, although liquid may also be present. Water extraction system 124 may be configured to transfer heat from the exhaust flow to cause a portion of the vapor phase to condense into the liquid phase. Hence, water flow WS may be largely in the liquid phase (although vapor may also be present). If water flow WS is provided to an inlet flow of fuel cell system 100, as discussed below, the inlet flow and/or fuel cell system 100 may transfer heat to water flow WS (e.g., when water flow WS is injected in the inlet flow), such that the liquid phase of water flow WS largely vaporizes into the vapor phase.

In examples, fuel cell system 100 includes a water distribution system 126 configured to receive water flow WS from water extraction system 124. Water distribution system 126 may be configured to provide at least some portion of water flow WS to one or more inlet flows of fuel cell system 100 (e.g., one or more of inlet feed FO, first feed F1, and/or second feed F2). Water distribution system 126 may be configured to provide some portion of water flow WS to the inlet flow to enhance the operation of fuel cell stack 104 by, for example, keeping one or more individual fuel cells such as fuel cell 106 moist during operation of fuel cell stack 104. This may protect membranes and/or electrolyte within fuel cell 106 from damage and/or enhance an operating efficiency of fuel cell stack 104.

For example, water distribution system 126 may include a pipe or other conduit 130 ("pipe 130") configured to convey water flow WS from water extraction system 124 and transfer the at least some portion to the inlet flow. In examples, water distribution system 126 is configured to provide a first extracted flow W1 to the inlet flow. First extracted flow W1 may be some portion of water flow WS (e.g., some portion of or substantially all of water flow WS). Water distribution system 126 may be configured to discharge a second discharge flow W2. Second extracted flow W2 may be some portion of water flow WS (e.g., some portion of or substantially all of water flow WS). In examples, second discharge flow W2 substantially comprises water flow WS less first extracted flow W1. In examples, water distribution system 126 includes a pipe or other conduit 136 ("pipe 136") configured to convey first discharge flow W1 from water extraction system 124 to the inlet flow. Water distribution system 126 may include a pipe or other conduit 138 ("pipe 138") configured to convey second discharge flow W2.

Water distribution system 126 may be configured to control a flow rate of first discharge flow W1 and/or a flow rate of second discharge flow W2. In examples, water distribution system 126 includes a flow control device 140 (e.g., a valve) configured to control the flow rate of first discharge flow W1 and/or the flow rate of second discharge flow W2. For example, flow control device 140 may be configured to receive water flow WS and position one or more restricting elements within flow control device 140 to control the flow rate of first discharge flow W1 and/or second discharge flow W2. In examples, flow control device 140 is a flow divider valve configured to substantially split water flow WS into first discharge flow W1 and second discharge flow W2. In examples, flow control device 140 is configured to increase the flow rate of first discharge flow W1 while decreasing the flow rate of second discharge flow W2, and/or decrease the flow rate of first discharge flow W1 while increasing the flow rate of second discharge flow W2.

In examples, water distribution system 126 includes a water transfer device 132 (e.g., a pump or other fluid pressurization system) configured to transfer water (e.g., first extracted flow W 1) extracted by water extraction system 124 to the inlet flow of fuel cell assembly 102 (e.g., one or more of inlet feed FO, first feed F1 and/or second feed F2). In examples, water transfer device 132 is configured to receive first extracted flow W1 from pipe 136 and transfer first extracted flow W1 to the inlet flow. In some examples, water distribution system 126 includes a distributor 134 (e.g., a nozzle or other fluid distribution device) configured to transfer water (e.g., first extracted flow W1) extracted by water extraction system 124 to the inlet flow. For example, distributor 134 may be a nozzle configured to provide a water spray SP to the inlet flow, wherein water spray SP comprises at least some portion of water flow WS and/or first extracted flow W1. In examples, distributor 134 is configured to receive first extracted flow W1 from water transfer device 132.

In examples, fuel cell system 100 includes control circuitry 142 configured to control one or more operations of fuel cell system 100. Fuel cell system 100 may include one or more sensors 144 ("sensors 144") configured to communicate with control circuitry 142 (e.g., via communication link 146). In examples, sensors 144 are configured to sense one or more parameters (e.g., a pressure, a temperature, a flow rate, a humidity (e.g., a relative humidity), or another parameter) of at least one of inlet flow FO, first feed F1, second feed F2, first exhaust flow F3, and/or second exhaust flow F4). Sensors 144 may be configured to communicate a signal indicative of the parameter to control circuitry 142 via communication link 146 or another communication link.

Sensors 144 may be configured to sense at least one of a humidity (e.g., a relative humidity), a temperature, a pressure, a flow rate, and/or another flow parameter of one of inlet flow FO, first feed F1, or second feed F2 and communicate a signal indicative of the humidity, the temperature, the pressure, the flow rate, and/or the other flow parameter to control circuitry 142. Control circuitry 142 may be configured to cause water distribution system 126 to control a flow rate of first extracted flow W1 based on the indicative signal from sensors 144. For example, control circuitry 142 may communicate with water transfer device 132 (e.g., using a communication link 148) and/or flow control device 140 (e.g., using a communication link 150) to increase, decrease, or hold steady the flow rate of first extracted flow W1 based on the indicative signal from sensors 144. In some examples, control circuitry 142 may control the flow rate of first extracted flow W1 based on at least one of a humidity (e.g., a relative humidity), a temperature, and/or a pressure of first exhaust flow F3 and/or second exhaust flow F4.

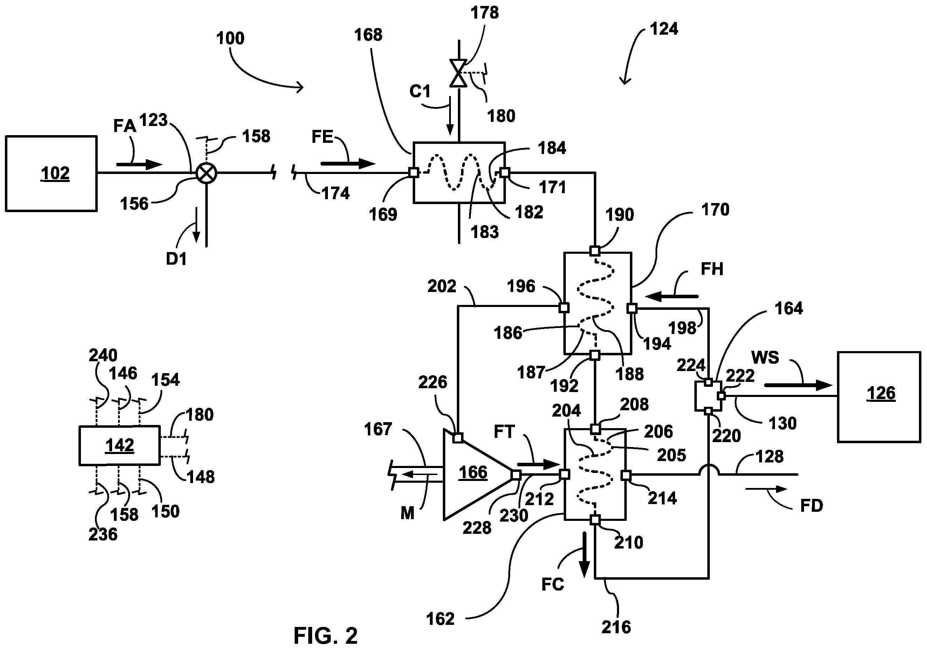

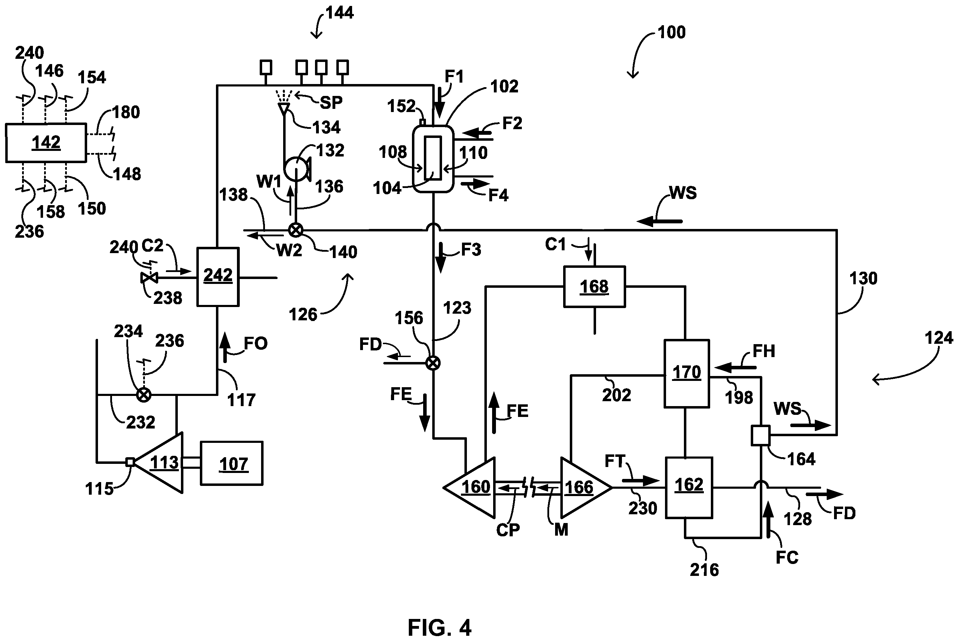

In some examples, fuel cell system 100 may include a sensor 152 configured to sense an electrical power generated by fuel cell assembly 102 (e.g., an electrical power derived from the electric potential between first electrode 109 and second electrode 111). Sensor 152 may be configured to communicate a signal indicative of the electrical power to control circuitry 142 (e.g., using communication link 154). Control circuitry 142 may be configured to control one or more operations of fuel cell system 100 based on the indicative signal from sensor 152. For example, control circuitry 142 may be configured to cause water distribution system 126 to control the flow rate of first extracted flow W1 based on the indicative signal from sensor 152. Control circuitry 142 may be configured to control inlet compressor 113, water transfer device 132, flow control device 140, and/or other components of fuel cell system 100 based on the indicative signal from sensor 152. Further, control circuitry 142 may be configured to control inlet compressor 113, water transfer device 132, flow control device 140, and/or other components of water distribution system 126 based on one or more indicative signals from flow control device 156 (FIG. 2), flow control device 178 (FIG. 2), flow control device 234 (FIG. 4), flow control device 238 (FIG. 4), and/or other sensors and/or components within fuel cell system 100.

In the above and in the following examples, although water extraction system 124 may be largely discussed as receiving and extracting water from first exhaust flow F3, water extraction system 124 may be configured to receive and extract water from second exhaust flow F4 or both first exhaust flow F3 and second exhaust flow F4 instead of or in addition to receiving and extracting water from first exhaust flow F3. Similarly, in the above and in the following examples, although water extraction system 124 may be largely discussed as providing water flow W1 to first feed F1, water extraction system 124 may be configured to provide water flow W1 to second feed F2 or both first feed F1 and second feed F2 instead of or in addition to providing water flow W1 to first feed F1.

FIG. 2 is a schematic block diagram of a water extraction system 124 configured to extract water from an exhaust flow FE. Exhaust flow FE comprises at least some portion of exhaust FA provided by fuel cell assembly 102. For example, as discussed, exhaust FA may comprise at least a portion of first exhaust flow F3 and/or second exhaust flow F4. Exhaust flow FE may comprise substantially all of exhaust FA or an amount less than substantially all of exhaust FA. In examples, fuel cell system 100 is configured to control the portion of exhaust FA comprising exhaust flow FE. For example, fuel cell system 100 may be configured to provide a first portion of exhaust FA to water distribution system 126 as exhaust flow FE and discharge a second portion of exhaust FA as a discharge flow D1. In examples, water distribution system 126 includes a flow control device 156 (e.g., a valve) configured to control the flow rate of exhaust flow FE and/or the flow rate of discharge flow D1. Water extraction system 124 may be configured to receive exhaust flow FE via a pipe or other conduit 174 ("pipe 174").

Water extraction system 124 includes at least a condenser 162, an extractor 164, and a turbine 166. In examples, water extraction system 124 includes an intercooler 168 and/or a reheater 170. Pipe 174 may be configured to convey exhaust flow FE to and/or through intercooler 168, reheater 170, and/or condenser 162. Condenser 162 is configured to receive exhaust flow FE (via intercooler 168 and/or reheater 170 in some examples) and transfer heat from exhaust flow FE, causing some portion of water in a vapor phase within exhaust flow FE to condense to a liquid phase (e.g., condensate). Water extraction system 124 is configured such that a turbine exhaust FT from turbine 166 flows within and/or through condenser 162 and serves as a coolant (e.g., a secondary fluid) for condenser 162. Condenser 162 is configured to transfer the heat from exhaust flow FE to turbine exhaust FT to cause the condensation of vapor phase within exhaust flow FE to the liquid phase. Condenser 162 is configured to discharge a cooled exhaust flow FC. Fuel cell system 100 may be configured such that when turbine 166 provides turbine exhaust FT to condenser 162, cooled exhaust flow FC has a reduced temperature and/or pressure relative to exhaust flow FE entering the condenser, and/or has an increased fraction of liquid phase relative to the exhaust flow entering the condenser.

Condenser 162 is configured to discharge cooled exhaust flow FC to extractor 164. Extractor 164 is configured to substantially separate the liquid phase and the vapor phase within cooled exhaust flow FC. In examples, extractor 164 is configured to discharge at least some portion of the liquid phase as water flow WS and/or discharge a dehumidified exhaust flow FH, where dehumidified exhaust flow FH substantially comprises cooled exhaust flow FC less water flow WS.

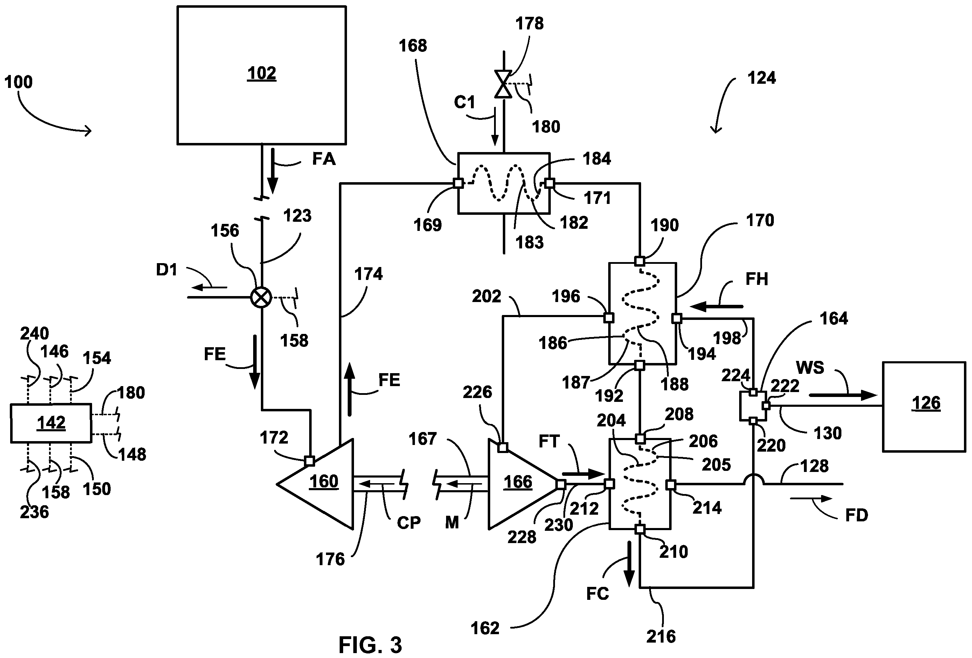

Turbine 166 is configured to receive dehumidified exhaust flow FH (via reheater 170 in some examples) and extract energy from dehumidified exhaust flow FH to generate power (e.g., turbine power M). Turbine 166 is configured to discharge turbine exhaust FT, which may comprise at least some portion of dehumidified exhaust flow FH. In examples, turbine 166 is configured to cause an expansion of dehumidified exhaust flow FH within turbine 166, resulting in turbine exhaust FT exiting turbine 166 at a reduced temperature and/or pressure relative to dehumidified exhaust flow FH entering turbine 166, and relative to exhaust flow FE entering condenser 162. Hence, water extraction system 124 may be configured to utilize turbine exhaust FT to transfer heat from exhaust flow FE within condenser 162 to cause the condensation of water vapor within exhaust flow FE to a liquid phase. Thus may avoid and/or reduce the operational need for a separate coolant system to provide a coolant to condenser 162. Water extraction system 124 may be configured to discharge turbine exhaust FT as discharge flow FD (e.g., turbine exhaust FT may comprise at least some portion of discharge flow FD). In some examples, water extraction system 124 may be configured such that discharge flow FD comprises at least some portion of cooling fluid C1 received by intercooler 168 (FIG. 3). In some examples, water extraction system 124 may be configured such that discharge flow FD comprises at least some portion of cooling fluid C2 received by heat exchanger 242 (FIG. 4).

Water extraction system 124 may be configured to substantially conserve (e.g., retain) some portion of the heat rejected by exhaust flow FE as water extraction system 124 extracts water flow WS. In examples, water extraction system 124 may be configured to cause exhaust flow FE to transfer heat to one or more flows and/or components of water extraction system 124, with the one or more flows and/or components configured to increase an inlet temperature and/or inlet pressure of turbine 166 as a result of the heat transfer. The increase in the inlet temperature and/or inlet pressure of turbine 166 may increase turbine power M, increasing the power that fuel cell system 100 may distribute to other loads within fuel cell system 100 and/or transmit to other loads outside of fuel cell system 100.

For example, water extraction system 124 may include reheater 170 configured to transfer heat to one or more flows and/or components of water extraction system 124. In examples, reheater 170 is configured to transfer heat from exhaust flow FE to dehumidified exhaust flow FH. In examples, reheater 170 is configured to transfer heat from exhaust flow FE prior to condenser 162 receiving exhaust flow FE. The transfer of heat to dehumidified exhaust flow FH may increase an inlet temperature and/or inlet pressure of turbine 166. Hence, Reheater 170 may be configured to substantially conserve heat by transferring heat from exhaust flow FE to dehumidified exhaust flow FH prior to the entry of exhaust flow FE into condenser 162. The conserved heat may increase an inlet temperature and/or inlet pressure of turbine 166, increasing turbine power M.

In some examples, the transfer of heat to dehumidified exhaust flow FH (e.g., from exhaust flow FE) may increase a quality (e.g., a fraction of total mass in the vapor phase) of dehumidified exhaust flow FH. For example, the transfer of heat to dehumidified exhaust flow FH enabled by reheater 170 may cause some portion of a liquid phase incidentally or intentionally discharged by extractor 164 to transition to the vapor phase prior to dehumidified exhaust flow FH entering turbine 166. The increase in the quality may limit potential damage to the blades and/or other components of turbine 166 that might result in the absence of reheater 170.

Water extraction system 124 may include intercooler 168 configured to transfer heat to one or more flows and/or components of water extraction system 124. In examples, intercooler 168 may be configured to cause a heat transfer from exhaust flow FE. In examples, intercooler 168 is configured to cause the heat transfer from exhaust flow FE in addition to the heat transfer from exhaust flow FE caused by reheater 170 and/or condenser 162. Control circuitry 142 may be configured to control and/or adjust the heat transfer (e.g., control and/or adjust an amount of heat transferred) from exhaust flow FE caused by intercooler 168. For example, fuel cell system 100 may be configured to control and/or adjust the heat transfer from exhaust flow FE caused by intercooler 168 based on one or more operating conditions of reheater 170, condenser 162, turbine 166, and/or other components and/or portions of fuel cell system 100.

In examples, intercooler 168 is configured to receive a cooling fluid C1. Intercooler 168 may be configured to cause a heat transfer from exhaust flow FE to cooling fluid C1. In examples, control circuitry 142 is configured to control a flow rate of cooling fluid C1 to, for example, control and/or adjust the heat transfer from exhaust flow FE caused by intercooler 168. For example, Water extraction system 124 may include a flow control device 178 (e.g., a pump and/or valve) configured to control the flow rate of cooling fluid C1. Control circuitry 142 may be configured to communicate with flow control device 178 (e.g., via a communication link 180) to control the flow rate of cooling fluid C1.

In some examples, water extraction system 124 is configured such that cooling fluid C1 comprises at least some portion of turbine exhaust flow FT. For example, exhaust discharge 128 may be configured to supply turbine exhaust FT to intercooler 168 (e.g., via flow control device 178). Intercooler 168 may be configured to cause a heat transfer from exhaust flow FE to turbine exhaust FT. For example, (e.g., under expected operating conditions of turbine 166 and/or condenser 162), water extraction system 124 may be configured to provide turbine exhaust FT at a sufficiently reduced temperature such that heat exchange between exhaust flow FE and turbine exhaust FT (e.g., via intercooler 168) causes a temperature of exhaust feed FE exiting intercooler 168 (e.g., via intercooler outlet 171) to be less than a temperature of exhaust feed FE entering heat exchanger 242 (e.g., via intercooler inlet 169).

In examples, intercooler 168 is configured to cause a heat transfer from exhaust flow FE to cooling fluid C1, and condenser 162 and/or reheater 170 are configured to cause a another heat transfer from exhaust flow FE. Fuel cell system 100 may be configured such that the heat transfer of condenser 162 and/or reheater 170 is subsequent to the heat transfer of intercooler 168.

Hence, water extraction system 124 may be configured to receive exhaust flow FE from fuel cell assembly 102 and transfer heat from exhaust flow FE to cause condensation of a vapor phase within exhaust flow FE. In examples, water extraction system 124 is configured to cause a first heat transfer from exhaust flow FE to cooling fluid C1 (e.g., turbine exhaust FT) using intercooler 168. Water extraction system 124 may be configured to cause a second heat transfer from exhaust flow FE to dehumidified exhaust flow FH using reheater 170 subsequent to the first heat transfer of intercooler 168. Water extraction system 124 may be configured to cause a third heat transfer from exhaust flow FE to turbine exhaust FT using condenser 162 subsequent to the second heat transfer of reheater 170. Extractor 164 may be configured to receive cooled exhaust flow FC from condenser 162 and separate cooled exhaust flow FC into water flow WS and dehumidified exhaust flow FH. Extractor 164 may be configured to provide dehumidified exhaust flow FH to reheater 170, such that reheater 170 may cause the second heat transfer prior to turbine 166 receiving dehumidified exhaust flow FH. Water extraction system 124 may be configured to provide turbine exhaust FT to condenser 162 and/or intercooler 168, such that condenser 162 may cause the third heat transfer and/or intercooler 168 may cause the first heat transfer.

In examples, fuel cell assembly 102 is configured to generate water (e.g., from oxidation of a hydrogen-comprising fuel) at a cathode side of fuel cell assembly 102 (e.g., first side 108 (FIG. 1)) and exhaust at least some portion of the water via a cathode exhaust (e.g., first exhaust flow F3 (FIG. 1)). Exhaust flow FE may comprise at least some portion of the cathode exhaust. Thus, water extraction system 124 may be configured to receive a cathode exhaust from fuel cell assembly 102 and cause the condensation of water vapor within the cathode exhaust using heat transfers caused by intercooler 168, reheater 170, and/or condenser 162. Subsequent to the condensation, water extraction system 124 may extract water flow WS from the cathode exhaust flow. Fuel cell system 100 may provide at least a portion of water flow WS to inlet feed FO (e.g., first inlet F1 and/or second inlet F2). In some examples, as discussed, water extraction system 124 may be configured to, in addition to or instead of receiving the cathode exhaust, receive an anode exhaust from an anode side (e.g., second side 110 (FIG. 1) of fuel cell assembly 102 and extract water flow WS from the anode exhaust.

Fuel cell system 100 may be configured to control the relative flow rates of exhaust flow FE and discharge flow D1 using flow control device 156 . For example, flow control device 156 may be configured to receive exhaust FA and position one or more restricting elements within flow control device 156 to control the flow rate of exhaust flow FE and/or discharge flow D1. In examples, flow control device 156 is a flow divider valve configured to substantially split exhaust FA into exhaust FA and discharge flow D1. In examples, flow control device 156 is configured to increase the flow rate of exhaust flow FE while decreasing the flow rate of discharge flow D1, and/or decrease the flow rate of exhaust flow FE while increasing the flow rate of discharge flow D1. Control circuitry 142 may be configured to communicate with flow control device 156 (e.g., via a communication link 158) to increase, decrease, or hold steady the flow rate of exhaust FA based on, for example, indicative signals from sensors 144, sensor 152, flow control device 140, flow control device 178, flow control device 234, flow control device 238, and/or other sensors and/or components within fuel cell system 100.

Intercooler 168 may be configured to substantially prevent mixing of exhaust flow FE and cooling fluid C1. In examples, intercooler 168 is configured to transfer heat from exhaust flow FE to cooling fluid C1 through a solid wall 183 (e.g., a pipe wall and/or plate) of intercooler 168 as exhaust flow FE fluidically communicates with (e.g., is in contact with) a first side 182 of solid wall 183 and cooling fluid C1 fluidically communicates with (e.g., is in contact with) a second side 184 of solid wall 183. Second side 184 may be separated from first side 182 by a body of solid wall 183. Intercooler 168 may be, for example, a double-pipe heat exchanger, a counter flow heat exchanger, a shell-and-tube heat exchanger, a plate heat exchanger, or some other type of heat exchanger configured to cause a heat transfer from exhaust flow FE to cooling fluid C1.

In examples, intercooler 168 includes an intercooler inlet 169 and an intercooler outlet 171 in fluidic communication with intercooler inlet 169. Water extraction system 124 may be configured such that intercooler inlet 169 receives exhaust flow FE at a first temperature and intercooler outlet 171 discharges exhaust flow FE at a second temperature less than the first temperature (e.g., when intercooler 168 receives cooling fluid C1). In examples, intercooler inlet 169 is configured to receive exhaust flow FE from exhaust compressor 160 (e.g., via a first portion of pipe 174). Intercooler outlet 171 may be configured to discharge exhaust flow FE to reheater 170 (e.g., via a second portion of pipe 174).

Reheater 170 may be configured to substantially prevent mixing of exhaust flow FE and dehumidified exhaust flow FH. In examples, reheater 170 is configured to transfer heat from exhaust flow FE to dehumidified exhaust flow FH through a solid wall 187 (e.g., a pipe wall and/or plate) of reheater 170 as exhaust flow FE fluidically communicates with (e.g., is in contact with) a first side 186 of solid wall 187 and dehumidified exhaust flow FH fluidically communicates with (e.g., is in contact with) a second side 188 of solid wall 187. Second side 188 may be separated from first side 186 by a body of solid wall 187. Reheater 170 may be, for example, a double-pipe heat exchanger, a counter flow heat exchanger, a shell-and-tube heat exchanger, a plate heat exchanger, or some other type of heat exchanger configured to cause a heat transfer from exhaust flow FE to dehumidified exhaust flow FH.

In examples, reheater 170 includes a reheater primary inlet 190 and an reheater primary outlet 192 in fluidic communication with reheater primary inlet 190. Water extraction system 124 may be configured such that reheater primary inlet 190 receives exhaust flow FE at a first reheater temperature and reheater primary outlet 192 discharges exhaust flow FE at a second reheater temperature less than the first reheater temperature (e.g., when reheater 170 receives dehumidified exhaust flow FH and/or another secondary fluid). In examples, reheater primary inlet 190 is configured to receive exhaust flow FE from intercooler 168 (e.g., via the second portion of pipe 174). Reheater primary outlet 192 may be configured to discharge exhaust flow FE to condenser 162 (e.g., via a third portion of pipe 174).

In examples, reheater 170 includes a reheater secondary inlet 194 and an reheater secondary outlet 196 in fluidic communication with reheater secondary inlet 194. Reheater 170 may be configured to receive a secondary fluid (e.g., dehumidified exhaust flow FH) via reheater secondary inlet 194. Reheater 170 may be configured to discharge the secondary fluid via reheater secondary outlet 196. Water extraction system 124 may be configured such that reheater secondary inlet 194 receives the secondary fluid (e.g., dehumidified exhaust flow FH) at a third reheater temperature and reheater secondary outlet 196 discharges the secondary fluid (e.g., dehumidified exhaust flow FH) at a fourth reheater temperature greater than the third reheater temperature (e.g., when reheater 170 receives dehumidified exhaust flow FH and/or another secondary fluid).

In examples, reheater secondary inlet 194 is configured to receive dehumidified exhaust flow FH from extractor 164. For example, reheater secondary inlet 194 may be configured to receive dehumidified exhaust flow FH from extractor 164 via a pipe or other conduit 198 ("pipe 198") configured to convey dehumidified exhaust flow FH to reheater secondary inlet 194. Reheater secondary outlet 196 may be configured to discharge dehumidified exhaust flow FH to turbine 166. In examples, reheater secondary outlet 196 is configured to discharge dehumidified exhaust flow FH to turbine 166 via a pipe or other conduit 202 ("pipe 202") configured to convey dehumidified exhaust flow FH to turbine 166.

Condenser 162 may be configured to absorb heat caused by the condensation of water from exhaust flow FE and/or provide other cooling to exhaust flow FE. Condenser 162 may be configured to transfer heat from exhaust flow FE to a cooling fluid. In examples, turbine exhaust FT comprises the cooling fluid. In some examples, condenser 162 is a surface condenser configured to cause condensation of water from exhaust flow FE on a surface of condenser 162 (e.g., a surface of a heat transfer tube). In examples, condenser 162 is configured to transfer heat from exhaust flow FE to the cooling fluid through a solid wall 205 (e.g., a pipe wall, plate, and/or baffle) of condenser 162 as exhaust flow FE fluidically communicates with (e.g., is in contact with) a first side 204 of solid wall 205 and the coolant fluid fluidically communicates with (e.g., is in contact with) a second side 206 of solid wall 205. Condenser 162 may be configured to substantially prevent mixing of exhaust flow FE and the cooling fluid (e.g., using solid wall 205).

In examples, condenser 162 includes a condenser inlet 208 and a condenser outlet 210 in fluidic communication with condenser inlet 208. Water extraction system 124 may be configured such that condenser inlet 208 receives exhaust flow FE at a condenser inlet temperature and condenser outlet 210 discharges cooled exhaust flow FC at a condenser outlet temperature less than the condenser inlet temperature (e.g., when condenser 162 receives the cooling fluid). Water extraction system 124 may be configured such that condenser inlet 208 receives exhaust flow FE at a condenser inlet pressure and condenser outlet 210 discharges cooled exhaust flow FC at a condenser outlet pressure less than the condenser inlet pressure (e.g., when condenser 162 receives the cooling fluid). In examples, condenser inlet 208 is configured to receive exhaust flow FE from reheater 170 (e.g., via the third portion of pipe 174). Condenser outlet 210 may be configured to discharge cooled exhaust flow FC to extractor 164. In examples, condenser outlet 210 is configured to discharge cooled exhaust flow FC to extractor 164 via a pipe or other conduit 216 ("pipe 216") configured to convey cooled exhaust flow FC to extractor 164.

In examples, condenser 162 includes a coolant inlet 212 and a coolant outlet 214 in fluidic communication with coolant inlet 212. Condenser 162 may be configured to receive the cooling fluid (e.g., turbine exhaust FT) via coolant inlet 212. Condenser 162 may be configured to discharge the cooling fluid via coolant outlet 214. Water extraction system 124 may be configured such that coolant inlet 212 receives the cooling fluid (e.g., turbine exhaust FT) at a cooling fluid inlet temperature and coolant outlet 214 discharges the cooling fluid at a cooling fluid outlet temperature greater than the cooling fluid inlet temperature (e.g., condenser 162 receives turbine exhaust FT and/or another cooling fluid).

In examples, coolant inlet 212 is configured to receive the cooling fluid (e.g., turbine exhaust FT from turbine 166) via a pipe or other conduit 218 ("pipe 218") configured to convey the cooling fluid to coolant inlet 212. Coolant outlet 214 may be configured to discharge the cooling fluid (e.g., turbine exhaust FT) to exhaust discharge 128.

Extractor 164 is configured to substantially separate a liquid phase (e.g., a water liquid phase) of cooled exhaust flow FC and a vapor phase (e.g., a water vapor phase) of cooled exhaust flow FC. Extractor 164 is configured to discharge at least some portion of the liquid phase as water flow WS and discharge dehumidified exhaust flow FH. For example, extractor 164 may be a vane pack separator (e.g., including vanes and/or meshes configured to entrain and/or trap moisture within cooled exhaust flow FC), a centrifugal separator (e.g., configured to separate moisture from cooled exhaust flow FC using centrifugal force), a vertical separator (e.g., configured to separate moisture from cooled exhaust flow FC using gravity), or some other type of separator configured to separate a liquid phase of a fluid and a vapor phase of the fluid.

In examples, extractor 164 is configured to extract at least 50% of a water content from cooled exhaust flow FC, such as at least 60%, at least 70%, and/or at least 80%. The water content may be, for example, a mass of liquid water per a volume of cooled exhaust flow FC. In examples, extractor 164 is configured such that cooled exhaust flow FC has a first moisture content and dehumidified exhaust flow has a second moisture content (e.g., a mass of liquid water per a volume of dehumidified exhaust flow FH) less than the first moisture content. In examples, the second moisture content is less than about 40%, less than about 30%, and/or less than about 20% of the first moisture content.

In examples, extractor 164 includes an extractor inlet 220, a liquid outlet 222, and a vapor outlet 224. Liquid outlet 222 and/or vapor outlet 224 may be in fluidic communication with extractor inlet 220. Extractor 164 may be configured to receive cooled exhaust flow FC via extractor inlet 220 and discharge water flow WS via liquid outlet 222 and dehumidified exhaust flow FH via vapor outlet 224. In examples, extractor inlet 220 is configured to receive cooled exhaust flow FC via pipe 216. Liquid outlet 222 may be configured to discharge water flow WS to water distribution system 126 (e.g., via pipe 130). Vapor outlet 224 may be configured to discharge dehumidified exhaust flow FH to reheater 170 (e.g., to reheater secondary inlet 194 via, for example, pipe 198).

Turbine 166 may be configured to extract thermal energy and/or kinetic energy from dehumidified exhaust flow FH. Turbine 166 may be configured to convert the extracted thermal and/or kinetic energy into turbine power M. In examples, turbine 166 is configured to receive dehumidified exhaust flow FH at a turbine inlet 226 and discharge turbine exhaust FT at a turbine outlet 228. Turbine 166 may include a plurality of turbine blades (not shown) configured to receive the thermal energy and/or kinetic energy from dehumidified exhaust flow FH as dehumidified exhaust flow FH proceeds from turbine inlet 226 to turbine outlet 228. Turbine 166 may be configured such that flow impingement of dehumidified exhaust flow FH on the plurality of turbine blades causes the plurality of turbine blades to rotate about a turbine shaft (e.g., turbine shaft 167 and/or another shaft of turbine 166).

Turbine 166 may be configured such that dehumidified exhaust flow FH expands as dehumidified exhaust flow FH proceeds from turbine inlet 226 to turbine outlet 228. In examples, turbine 166 is configured to expand dehumidified exhaust flow FH such that dehumidified exhaust flow FH has an turbine inlet temperature at turbine inlet 226 and an turbine outlet temperature less than the turbine inlet temperature at turbine outlet 228. Turbine 166 may be configured to expand dehumidified exhaust flow FH such that dehumidified exhaust flow FH has a turbine inlet pressure at turbine inlet 226 and turbine exhaust FT has turbine outlet pressure less than the turbine inlet pressure at turbine outlet 228. In examples, water extraction system 124 is configured such that turbine inlet 226 receives dehumidified exhaust flow FH from reheater secondary outlet 196 (e.g., via pipe 202). Water extraction system 124 may be configured such that turbine outlet 228 discharges turbine exhaust FT to coolant inlet 212 (via a pipe or other conduit 230 ("pipe 230") configured to convey turbine exhaust FT to coolant inlet 212.

In some examples, turbine shaft 167 is a single shaft configured to transfer turbine power M. In some examples, turbine shaft 167 includes a plurality of turbine shafts configured to transfer turbine power M. For example, turbine shaft 167 may include a first turbine shaft and a second turbine shaft. In examples, turbine 166 includes a low pressure turbine (e.g., a low pressure section of turbine 166) configured to drive the first turbine shaft and/or a high pressure turbine (e.g., a high pressure section of turbine 166) configured to drive the second turbine shaft. In examples, the high pressure turbine is configured to transfer a first portion of mechanical power M using the first turbine shaft and the low pressure turbine is configured to transfer a second portion of mechanical power M using the second turbine shaft. In some examples, turbine shaft 167 is a twin-spool shaft configured such that an outer turbine shaft (e.g., one of the first turbine shaft or the second turbine shaft) may rotate about an inner turbine shaft (e.g., the other of the first turbine shaft or the second turbine shaft) and about a longitudinal axis as the inner turbine shaft rotates about the longitudinal axis.

FIG. 3 is a schematic block diagram of water extraction system 124 configured to increase the pressure of exhaust flow FE prior to transferring heat from exhaust flow FE using condenser 162. Conducting the heat transfer within condenser 162 at the increased pressure may increase the condensation of water from exhaust flow FE as the heat transfer occurs, as compared to a heat transfer within condenser 162 conducted at a lower pressure (e.g., a pressure substantially equal to a pressure of exhaust FA). For example, increasing the pressure of exhaust flow FE may result in an increase in density and/or an increase in the velocity of exhaust flow FE within condenser 162, increasing the heat transfer from and/or condensation of exhaust flow FE.

Referring to FIG. 3, water extraction system 124 may include a exhaust compressor 160 configured to increase a pressure of (e.g., compress) exhaust flow FE and discharge exhaust flow FE at an increased pressure. In examples, exhaust compressor 160 is configured to receive exhaust flow FE at an inlet pressure and discharge exhaust flow FE at an outlet pressure greater than the inlet pressure. Condenser 162 is configured to transfer heat from pressurized exhaust flow at the elevated pressure caused by the compression of exhaust compressor 160. Providing exhaust flow FE to condenser 162 at the elevated pressure may increase the heat transfer from exhaust flow FE as exhaust flow FE flows through condenser 162. For example, the elevated pressure of exhaust flow FE entering condenser 162 may increase a flow rate of exhaust flow FE through condenser 162, increasing the heat transfer from exhaust flow FE to condenser 162. The elevated pressure of exhaust flow FE entering condenser 162 may increase a density of exhaust flow FE within condenser 162, causing increased condensation as exhaust flow FE flows through condenser 162. Thus, in examples, condenser 162 is able to increase a condensation from the vapor phase to the liquid phase over that which might otherwise occur in the absence of a compression by exhaust compressor 160.

Exhaust compressor 160 may be configured to compress exhaust flow FE (e.g., to enhance water extraction) using a compressor power CP supplied to exhaust compressor 160. Compressor power CP may be mechanical power, electrical power, or a combination of mechanical power and electrical power. Turbine 166 may be configured to provide at least a portion of compressor power CP by extracting energy from the exhaust of fuel cell assembly 102 (e.g., dehumidified exhaust flow FH) following the water extraction by extractor 164. For example, fuel cell system 100 may be configured to utilize at least some portion of turbine power M to supply compressor power CP. Hence, water extraction system 124 may be configured to recapture at least some portion of the compressor power CP required to compress exhaust flow FE and provide the recaptured power to exhaust compressor 160, reducing and/or eliminating a power requirement for exhaust compressor 160 that might otherwise need to be supplied from a power source outside of fuel cell system 100, or from fuel cell assembly 102.

Exhaust compressor 160 may be configured to receive exhaust flow FE via an exhaust compressor inlet 172 (e.g., at the inlet pressure) and discharge exhaust flow FE (e.g., at the outlet pressure) to pipe 174. Pipe 174 may be configured to convey exhaust flow FE at an elevated pressure (e.g., a pressure greater than the inlet pressure) to and/or through intercooler 168, reheater 170, and/or condenser 162. In examples, exhaust compressor 160 is configured to discharge exhaust flow FE at an outlet pressure at least 1.5 times that of the inlet pressure in some examples, at least 2 times that of the inlet pressure in some examples, and/or at least 3 times that of the inlet pressure in some examples.

Compressor power CP may be mechanical power, electrical power, or a combination of mechanical power and electrical power. In examples, exhaust compressor 160 is a shaft-driven compressor configured to receive at least some portion of compressor power CP as a shaft power (e.g., mechanical power) via a compressor shaft 176. In some examples, exhaust compressor 160 is a rotary compressor including an impellor configured to compress a fluid (e.g., exhaust flow FE) when the impellor rotates in response to a rotary torque on the impellor. Exhaust compressor 160 may be configured to receive the rotary torque via compressor shaft 176.

In some examples, second compressor shaft 176 may include a plurality of compressor shafts configured to receive compressor power CP. For example, second compressor shaft 176 may include a first compressor shaft and a second compressor shaft. Exhaust compressor 160 may include a low pressure compressor (e.g., a low pressure section of exhaust compressor 160) configured to receive a first portion of compressor power CP via the first compressor shaft. Exhaust compressor 160 may include a high pressure compressor (e.g., a high pressure section of exhaust compressor 160) configured to receive a second portion of compressor power CP via the second shaft. The low pressure compressor may be configured to compress a first portion of exhaust flow FE using the first portion of compressor power CP. The high pressure compressor may be configured to compress a second portion of exhaust flow FE and/or additionally compress the first portion using the second portion of compressor power CP.

Water extraction system 124 (e.g., exhaust compressor 160) may be configured to substantially combine the first portion and the second portion to produce exhaust flow FE at the outlet pressure. In some examples, compressor shaft 176 is a twin-spool shaft configured such that an outer compressor shaft (e.g., one of the first compressor shaft or the second compressor shaft) may rotate about an inner compressor shaft (e.g., the other of the first compressor shaft or the second compressor shaft) and about a longitudinal axis as the inner compressor shaft rotates about the longitudinal axis.

As discussed, turbine 166 may be configured to provide at least a portion of compressor power CP. For example, water extraction system 124 may be configured to convert at least some portion of mechanical power M into compressor power CP. In examples, turbine 166 (e.g., turbine shaft 167) is configured to cause and/or impart a torque on compressor shaft 176 such that compressor shaft 176 experiences a rotary torque. For example, turbine shaft 167 may be coupled (e.g., mechanically coupled) to compressor shaft 176, such that turbine shaft 167 transfers at least a portion of mechanical power M to compressor shaft 176.

In some examples, turbine shaft 167 and compressor shaft 176 comprise a common shaft (e.g., a unitary shaft which defines turbine shaft 167 and compressor shaft 176). In some examples, when turbine 166 includes the first turbine shaft and the second turbine shaft, turbine 166 may be configured to transfer mechanical power MP to exhaust compressor 160 using one of the first turbine shaft or the second turbine shaft and transfer additional mechanical power (e.g., to other portions of fuel cell system 100 and/or to other loads) using the other of the first turbine shaft or the turbine second shaft. In some examples, turbine shaft 167 is configured to transfer mechanical power MP to exhaust compressor 160 using the first turbine shaft and the second turbine shaft. For example, turbine shaft 167 may be configured to transfer a first portion of mechanical power M to the low pressure compressor of exhaust compressor 160 using the first turbine shaft. Turbine shaft 167 may be configured to transfer a second portion of mechanical power M to the high pressure compressor of exhaust compressor 160 using the second turbine shaft.

Thus, water extraction system 124 may be configured to compress exhaust flow FE assembly prior to conducting the water extraction. Exhaust compressor 160 may be configured to compress exhaust flow FE and provide the thus pressurized exhaust flow FE to condenser 162 (e.g., via intercooler 168 and/or reheater 170). The elevated pressure of exhaust flow FE entering condenser 162 may increase a flow rate of exhaust flow FE through condenser 162 and/or increase a density of exhaust flow FE within condenser 162, potentially increasing the heat transfer and condensation experienced by exhaust flow FE within condenser 162.

FIG. 4 is a schematic block diagram of fuel cell system 100 with water extraction system 124 configured to extract water from an cathode exhaust of fuel cell assembly 102. In the example of FIG. 3, inlet feed FO and first feed F1 includes 02, air, and/or some other molecule containing oxygen. Second feed F2 comprises H2, a hydrocarbon, or some other molecule including hydrogen. First side 108 is a cathode side of fuel cell stack 104, and second side 110 is an anode side of fuel cell stack 104. First exhaust fluid F3 is a cathode exhaust and second exhaust feed F4 is an anode exhaust. As discussed, water extraction system 124 may or may not include exhaust compressor 160.

Inlet compressor 113 may be a motor-driven compressor driven by motor 107. In examples, fuel cell system 100 includes a compressor bypass 232 configured to direct (e.g., to shunt) at least some portion inlet feed FO from a compressor outlet of inlet compressor 113 (and/or pipe 117) to first compressor inlet 115. In examples, control circuitry 142 is configured to control a flow rate of inlet feed FO through compressor bypass 232 using a flow control device 234 (e.g., a valve). Control circuitry 142 may be configured to communicate with flow control device 234 (e.g., via a communication link 236) to increase, decrease, or hold steady the flow rate of inlet feed FO through compressor bypass 232 based on, for example, indicative signals received from sensors 144, sensor 152, flow control device 140, flow control device 156, flow control device 178, flow control device 234, flow control device 238, and/or other sensors and/or components within fuel cell system 100.

In examples, fuel cell system 100 includes a heat exchanger 242 configured to transfer heat between inlet feed FO and a cooling fluid C2. For example, heat exchanger 242 may be configured to cause a heat transfer from inlet feed FO to cooling fluid C2 to, for example, remove at least some portion of a heat of compression added to inlet feed FO by inlet compressor 113. In examples, control circuitry 142 is configured to control and/or adjust the heat transfer (e.g., control and/or adjust an amount of heat transferred) from or to inlet feed FO by heat exchanger 242. For example, control circuitry 142 may be configured to control a flow rate of cooling fluid C2 using flow control device 238 (e.g., a pump and/or valve). Control circuitry 142 may be configured to communicate with flow control device 238 (e.g., via a communication link 240) to control the heat transfer from or to inlet feed FO by heat exchanger 242 based on, for example, indicative signals received from sensors 144, sensor 152, flow control device 140, flow control device 156, flow control device 178, flow control device 234, and/or other sensors and/or components within fuel cell system 100.

Heat exchanger 242 may be configured to substantially prevent mixing of inlet feed FO and cooling fluid C1 as heat exchanger 242 transfers heat between inlet feed FO and cooling fluid C2. Heat exchanger 242 may be, for example, a double-pipe heat exchanger, a counter flow heat exchanger, a shell-and-tube heat exchanger, a plate heat exchanger, or some other type of heat exchanger configured to cause a heat transfer between inlet feed FO and cooling fluid C2. In examples, heat exchanger 242 is configured to receive inlet feed FO from inlet compressor 113. Heat exchanger 242 may be configured to provide inlet feed FO to fuel cell assembly 102.

In some examples, water extraction system 124 is configured such that cooling fluid C2 comprises at least some portion of turbine exhaust flow FT. For example, exhaust discharge 128 may be configured to supply turbine exhaust FT to heat exchanger 242 (e.g., via flow control device 238). Heat exchanger 242 may be configured to cause a heat transfer from inlet feed FO to turbine exhaust FT. For example, (e.g., under expected operating conditions of turbine 166 and/or condenser 162), water extraction system 124 may be configured to provide turbine exhaust FT at a sufficiently reduced temperature such that heat exchange between inlet feed FO and turbine exhaust FT (e.g., via heat exchanger 242) causes a temperature of inlet feed FO exiting heat exchanger 242 to be less than a temperature of inlet feed FO entering heat exchanger 242.

In FIG. 4, fuel cell system 100 is configured to send at least some portion of the cathode exhaust (e.g., exhaust fluid F3) to water extraction system 124 via flow control device 156. Water extraction system 124 may include exhaust compressor 160, intercooler 168, reheater 170, condenser 162, extractor 164, and/or turbine 166. Water extraction system 124 is configured to remove at least some portion of the water within the cathode exhaust and provide water flow WS to water distribution system 126.

Fuel cell stack 104 may comprise any suitable fuel cells, including externally manifolded and/or internally manifolded stacks. For example, a fuel cell such as fuel cell 106 may be internally manifolded for fuel and an oxidizer (e.g., oxygen and/or air) with fuel and oxidizer risers extending through openings in fuel cell layers and/or in interconnect plates between fuel cell 106 and one or more other fuel cells in fuel cell stack 104. Alternatively, fuel cell 106 may be internally manifolded for fuel and externally manifolded for the oxidizer, where only fuel channels and exhaust risers extend through openings in fuel cell layers and/or in the interconnect plates. Fuel cell 106 may be configured for a cross flow configuration (where fuel and the oxidizer flow roughly perpendicular to each other on opposite sides of an electrolyte or membrane in fuel cell 106), a counter flow parallel configuration (where fuel and the oxidizer flow roughly parallel to each other but in opposite directions on the opposite sides), and/or co-flow parallel configuration (where fuel and the oxidizer flow roughly parallel to each other in the same direction on the opposite sides. Fuel cell 106 may include end plates configured to conduct electricity generated by fuel cell 106 out of fuel cell stack 104. In some examples, fuel cell 106 includes cooling channels configured to receive a cooling fluid.

In some examples, exhaust compressor inlet 172 receives exhaust flow FE at a temperature greater than about 80 deg C, such as a temperature of about 92 deg C. Exhaust compressor 160 may issue exhaust flow FE at a temperature greater than about 120 deg C, such as a temperature of about 150 deg C. Intercooler inlet 169 may receive exhaust flow FE and intercooler outlet 171 may issue exhaust flow FE at a temperature greater than about 70 deg C, such as a temperature of about 84 deg C. Reheater primary inlet 190 may receive exhaust flow FE at a temperature greater than about 70 deg C, such as a temperature of about 84 deg C. Vapor outlet 224 may issues dehumidified exhaust flow FH at a temperature greater than about 58 deg C, such as a temperature of about 78 deg C. Reheater secondary inlet 194 may receive dehumidified exhaust flow FH and reheater secondary outlet 196 may issue dehumidified exhaust flow FH at a temperature greater than about 60 deg C, such as a temperature of about 80 deg C. Turbine inlet 226 may receive dehumidified exhaust flow FH and turbine outlet 228 may issue turbine exhaust FT at a temperature of greater than about 30 deg C, such as a temperature of about 43 deg C. Coolant inlet 212 may receive the turbine exhaust FT and coolant outlet 214 may issue discharge flow FD at a temperature greater than about 30 deg C, such as a temperature of about 46 deg C.

Communication links 146, 148, 150, 154, 158, 180, 236, 240 may be hard-line and/or wireless communications links. In some examples, Communication links 146, 148, 150, 154, 158, 180, 236, 240 may comprise some portion of control circuitry 142. In some examples, Communication links 146, 148, 150, 154, 158, 180, 236, 240 comprise a wired connection, a wireless Internet connection, a direct wireless connection such as wireless LAN, Bluetooth^{™}, Wi-Fi^{™}, and/or an infrared connection. Communication links 146, 148, 150, 154, 158, 180, 236, 240 may utilize any wireless or remote communication protocol.

In examples, control circuitry 142 may include any one or more of a microcontroller (MCU), e.g., a computer on a single integrated circuit containing a processor core, memory, and programmable input/output peripherals, a microcontroller (µP), e.g., a central processing unit (CPU) on a single integrated circuit (IC), a controller, a digital signal processor (DSP), an application specific integrated circuit (ASIC), a field-programmable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry.

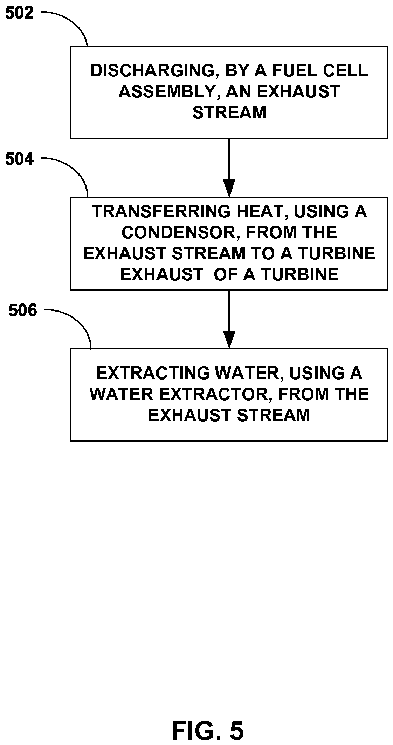

FIG. 5 illustrates a flow diagram of an example technique for extracting water from an exhaust flow of a fuel cell assembly. Although the technique is mainly described with reference to fuel cell system 100 and the components thereof (FIGS. 1-4), the technique may be used with other systems in other examples. In addition, control circuitry 142 alone or in combination with control circuitry of other devices can perform any part of the technique shown in FIG. 5.

The technique includes discharging, by fuel cell assembly 102, an exhaust flow FE (e.g., first exhaust flow F3 and/or second exhaust flow F4) (502). In examples, fuel cell assembly receives a first feed F1 and a second feed F2. First exhaust fluid F3 may include one or more compounds comprising atoms introduced to fuel cell assembly 102 by first feed F1 and/or one or more constituent compounds of first feed F1 which substantially pass through fuel cell assembly 102 to be discharged through a first exhaust 120 via first exhaust fluid F3. In examples, first exhaust fluid F3 comprises water. In examples, first exhaust F3 is a cathode exhaust of fuel cell assembly 102.

Second exhaust fluid F4 may include one or more compounds comprising atoms introduced to fuel cell assembly 102 by second feed F2, and/or one or more constituent compounds of second feed F2 which substantially pass through fuel cell assembly 102 to be discharged through a second exhaust 122 via second exhaust fluid F4. In examples, second exhaust F4 comprises water. In examples, second exhaust feed F4 is an anode exhaust of fuel cell assembly 102.

In examples, an inlet feed FO comprises one of first feed F1 or second feed F2. A inlet compressor 113 may compress inlet feed FO from a first pressure to a second pressure greater than the first pressure prior to fuel cell assembly 102 receiving first feed F1 and second feed F2.

The technique includes transferring heat, using a condenser 162, from exhaust flow FE to a turbine exhaust FT of a turbine 166 (504). Condenser 162 may some portion of a water vapor phase of exhaust flow FE to condense to a water liquid phase when condenser 162 transfers the hear from exhaust flow FE. Condenser 162 may discharge a cooled exhaust flow FC including some portion of the water liquid phase and the water vapor phase.

The technique includes extracting water from cooled exhaust flow FC using extractor 164 (506). Extractor 164 may discharge a water flow W1 and a dehumidified exhaust flow FH. In examples, extractor 164 discharges water flow W1 to water distribution system 126. Water distribution system 126 may provide at least some portion of water flow W1 to inlet feed FO.

In examples, a reheater 170 transfers heat from exhaust flow FE. Reheater 170 may transfer heat from exhaust flow FE to dehumidified exhaust flow FH. Reheater 170 may provide exhaust flow FE to condenser 162. In examples, reheater 170 provides the dehumidified exhaust flow FH to turbine 166. Turbine 166 may generate a turbine power M using dehumidified exhaust flow FH and exhaust turbine exhaust FT.

In some examples, the technique includes compressing, using an exhaust compressor 160, the exhaust flow FE. Exhaust compressor 160 may compress inlet feed FO from an inlet pressure and discharge exhaust flow FE at an outlet pressure greater than the inlet pressure. In examples, second compressor discharges exhaust flow FE to an intercooler 168. Intercooler 168 may transfer heat from exhaust flow FE to a cooling fluid C1.

The techniques described in this disclosure, including those attributed to control circuitry 142 and other control circuitry, processing circuitry, sensors, or various constituent components of fuel cell system 100, may be implemented, at least in part, in hardware, software, firmware or any combination thereof. For example, various aspects of the techniques may be implemented within one or more processors, including one or more microprocessors, DSPs, ASICs, FPGAs, or any other equivalent integrated or discrete logic circuitry, as well as any combinations of such components, embodied in any suitable device. Processing circuitry, control circuitry, and sensing circuitry, as well as other processors, controllers, and sensors described herein, may be implemented at least in part as, or include, one or more executable applications, application modules, libraries, classes, methods, objects, routines, subroutines, firmware, and/or embedded code, for example. In addition, analog circuits, components and circuit elements may be employed to construct one, some or all of the control circuitry and sensors, instead of or in addition to the partially or wholly digital hardware and/or software described herein. Accordingly, analog or digital hardware may be employed, or a combination of the two.

In one or more examples, the functions described in this disclosure may be implemented in hardware, software, firmware, or any combination thereof. If implemented in software, the functions may be stored on, as one or more instructions or code, a computer-readable medium and executed by a hardware-based processing unit. The computer-readable medium may be an article of manufacture including a non-transitory computer-readable storage medium encoded with instructions. Instructions embedded or encoded in an article of manufacture including a non-transitory computer-readable storage medium encoded, may cause one or more programmable processors, or other processors, to implement one or more of the techniques described herein, such as when instructions included or encoded in the non-transitory computer-readable storage medium are executed by the one or more processors. Example non-transitory computer-readable storage media may include RAM, ROM, programmable ROM (PROM), erasable programmable ROM (EPROM), electronically erasable programmable ROM (EEPROM), flash memory, a hard disk, a compact disc ROM (CD-ROM), a floppy disk, a cassette, magnetic media, optical media, or any other computer readable storage devices or tangible computer readable media.

In some examples, a computer-readable storage medium comprises non-transitory medium. The term "non-transitory" may indicate that the storage medium is not embodied in a carrier wave or a propagated signal. In certain examples, a non-transitory storage medium may store data that can, over time, change *(e.g.,* in RAM or cache).

The functionality described herein may be provided within dedicated hardware and/or software modules. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components. Also, the techniques could be fully implemented in one or more circuits or logic elements.

The present disclosure includes the following examples.

Example 1: A system comprising: a fuel cell assembly configured to receive an inlet feed at a fuel cell inlet and discharge an exhaust flow at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent; a condenser configured to receive the exhaust flow, wherein the condenser is configured to transfer heat from the exhaust flow and discharge a cooled exhaust flow; an extractor configured to receive the cooled exhaust flow, wherein the extractor is configured to extract water from the cooled exhaust flow and discharge a dehumidified exhaust flow; and a turbine configured to extract energy from the dehumidified exhaust flow and discharge a turbine exhaust to the condenser, wherein the condenser is configured to transfer the heat from the exhaust flow to the turbine exhaust.

Example 2: The system of example 1, wherein the system is configured to discharge at least some portion of the water extracted by the extractor to the inlet feed.

Example 3: The system of example 1 or example 2, wherein the fuel cell assembly is configured to generate at least a portion of the water extracted by the extractor when the fuel cell assembly receives the inlet feed and the fuel cell assembly receives a fuel.

Example 4: The system of any of examples 1-3, further comprising a reheater, wherein the reheater is configured to transfer heat from the exhaust flow prior to the condenser transferring heat from the exhaust flow.

Example 5: The system of example 4, wherein the reheater is configured to receive the dehumidified exhaust flow prior to the turbine extracting energy from the dehumidified exhaust flow, and wherein the reheater is configured to transfer the heat from the exhaust flow to the dehumidified exhaust flow.

Example 6: The system of any of examples 1-5, further comprising an intercooler configured to transfer heat from the exhaust flow prior to the condenser transferring heat from the exhaust flow.

Example 7: The system of any of examples 1-6, further comprising an exhaust compressor configured to receive the exhaust flow at an inlet pressure and compress the exhaust flow to an outlet pressure greater than the inlet pressure, wherein the exhaust compressor is configured to compress the exhaust flow prior to the condenser receiving the exhaust flow.

Example 8: The system of example 7, wherein the exhaust compressor is configured to compress the exhaust flow using a compressor power supplied to the exhaust compressor, and wherein the turbine is configured to provide at least a portion of the compressor power as the turbine extracts the energy from the dehumidified exhaust flow.

Example 9: The system of example 8, wherein the exhaust compressor includes a compressor shaft configured to receive the compressor power, and wherein the turbine includes a turbine shaft configured to provide the portion of the compressor power to the compressor shaft.

Example 10: The system of any of examples 1-9, further comprising a water distribution system configured to supply at least a portion of the water extracted by the extractor to the inlet feed.

Example 11: The system of any of examples 1-10, further comprising: one or more sensors configured to sense a humidity of the inlet feed; and control circuitry configured to: determine a water flow rate based on the humidity sensed by the one or more sensors, and cause a water distribution system to supply extracted water to the inlet feed at the water flow rate, wherein the extracted water is at least a portion of the water extracted by the extractor.

Example 12: The system of any of examples 1-11, further comprising an inlet compressor configured to receive the inlet feed at a first pressure and compress the inlet feed to a second pressure greater than the first pressure, wherein the inlet compressor is configured to compress the inlet feed prior to the fuel cell inlet receiving the inlet feed.

Example 13: The system of any of examples 1-12, further comprising a heat exchanger configured to receive the inlet feed prior to the fuel cell assembly receiving the inlet feed, wherein the heat exchanger is configured to transfer heat from the inlet feed prior to the fuel cell assembly receiving the inlet feed.

Example 14: The system of any of examples 1-13, wherein the fuel cell assembly defines a cathode side and an anode side, and wherein the fuel cell assembly is configured to generate a cathode exhaust at the fuel cell outlet when the inlet feed comprises the oxidizing agent, the cathode side receives the inlet feed, and the anode side receives the fuel, and wherein the exhaust flow is at least a portion of the cathode exhaust.

Example 15: The system of any of examples 1-14, wherein the extractor is configured to extract at least 50% of a water content from the cooled exhaust flow when the extractor receives the cooled exhaust flow, wherein the water content is a mass of water per a volume of cooled exhaust flow.

Example 16: A system comprising: a motor-driven compressor configured to provide an inlet feed; a fuel cell assembly configured to receive an inlet feed at a fuel cell inlet and discharge an exhaust flow at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent; a shaft-driven compressor configured to receive the exhaust flow, wherein the shaft-driven compressor is configured to compress the exhaust flow and discharge a pressurized exhaust flow having a pressure greater than the exhaust flow, and wherein the shaft-driven compressor is configured to compress the exhaust flow using a shaft power received from a shaft; a reheater configured to cause a first heat transfer from the pressurized exhaust flow; a condenser configured to receive the pressurized exhaust flow from the reheater, wherein the condenser is configured to cause a second heat transfer from the pressurized exhaust flow received from the reheater, and wherein the condenser configured to discharge a cooled exhaust flow; an extractor configured to receive the cooled exhaust flow, wherein the extractor is configured to extract water from the cooled exhaust flow and discharge a dehumidified exhaust flow, wherein the system is configured to discharge at least some portion of the extracted water to the inlet feed, and wherein the reheater is configured to receive the dehumidified exhaust flow and transfer heat from the pressurized exhaust flow to the dehumidified exhaust flow to cause the first heat transfer; and a turbine configured to receive the dehumidified exhaust flow from the reheater and provide a turbine exhaust, wherein the turbine exhaust comprises at least some portion of the dehumidified exhaust flow received from the reheater, wherein the turbine is configured to provide the shaft power to the shaft using the dehumidified exhaust flow received from the reheater, and wherein the condenser is configured to receive the turbine exhaust and transfer heat from the pressurized exhaust flow to the turbine exhaust to cause the second heat transfer.

Example 17: The system of example 16, wherein the fuel cell assembly defines a cathode side configured to receive the inlet feed and an anode side configured to receive a fuel, wherein the fuel cell assembly is configured to oxidize the fuel using the inlet feed and issue a cathode exhaust from the cathode side, and wherein the exhaust flow is at least a portion of the cathode exhaust.

Example 18: A method comprising: receiving, by a fuel cell assembly, an inlet feed at a fuel cell inlet, wherein the inlet feed comprises one of an oxidizing agent or a fuel, and wherein the fuel cell assembly is configured to oxidize the fuel using the oxidizing agent; discharging, by the fuel cell assembly, an exhaust flow at a fuel cell outlet fluidically coupled to the fuel cell inlet; transferring heat, using a condenser, from the exhaust flow to a turbine exhaust of a turbine and discharging, from the condenser, a cooled exhaust flow comprising at least a portion of the exhaust flow; extracting water, using an extractor, from the cooled exhaust flow and discharging a dehumidified exhaust flow comprising at least a portion of the cooled exhaust flow; and extracting energy, using a turbine, from the dehumidified exhaust flow and discharging, from the turbine, the turbine exhaust to the condenser, wherein the turbine exhaust comprises at least a portion of the dehumidified exhaust flow.

Example 19: The method of example 18, further comprising further comprising transferring heat, using a reheater, from the exhaust flow to the dehumidified exhaust flow prior to the condenser receiving the pressurized exhaust flow and prior to the turbine extracting energy from the dehumidified exhaust flow.

Example 20: The method of example 18 or example 19, further comprising compressing, using an exhaust compressor, the exhaust flow from an inlet pressure to an outlet pressure greater than the inlet pressure prior to the condenser receiving the exhaust flow.

Various examples have been described. These and other examples are within the scope of the following claims.

## Claims

1. A system comprising:
a fuel cell assembly configured to receive an inlet feed at a fuel cell inlet and discharge an exhaust flow at a fuel cell outlet fluidically coupled to the fuel cell inlet, wherein the inlet feed comprises one of an oxidizing agent or a fuel, and wherein the fuel cell assembly is configured to oxidize the fuel using the oxidizing agent;
a condenser configured to receive the exhaust flow, wherein the condenser is configured to transfer heat from the exhaust flow and discharge a cooled exhaust flow;
an extractor configured to receive the cooled exhaust flow, wherein the extractor is configured to extract water from the cooled exhaust flow and discharge a dehumidified exhaust flow; and
a turbine configured to extract energy from the dehumidified exhaust flow and discharge a turbine exhaust to the condenser,
wherein the condenser is configured to transfer the heat from the exhaust flow to the turbine exhaust.

2. The system of claim 1, wherein the system is configured to discharge at least some portion of the water extracted by the extractor to the inlet feed.

3. The system of claim 1 or claim 2, wherein the fuel cell assembly is configured to generate at least a portion of the water extracted by the extractor when the fuel cell assembly receives the inlet feed and the fuel cell assembly receives a fuel.

4. The system of any of claims 1-3, further comprising a reheater, wherein the reheater is configured to transfer heat from the exhaust flow prior to the condenser transferring heat from the exhaust flow.

5. The system of claim 4, wherein the reheater is configured to receive the dehumidified exhaust flow prior to the turbine extracting energy from the dehumidified exhaust flow, and wherein the reheater is configured to transfer the heat from the exhaust flow to the dehumidified exhaust flow.

6. The system of any of claims 1-5, further comprising an intercooler configured to transfer heat from the exhaust flow prior to the condenser transferring heat from the exhaust flow.

7. The system of any of claims 1-6, further comprising an exhaust compressor configured to receive the exhaust flow at an inlet pressure and compress the exhaust flow to an outlet pressure greater than the inlet pressure, wherein the exhaust compressor is configured to compress the exhaust flow prior to the condenser receiving the exhaust flow.

8. The system of any of claims 1-7, wherein the exhaust compressor is configured to compress the exhaust flow using a compressor power supplied to the exhaust compressor, and wherein the turbine is configured to provide at least a portion of the compressor power as the turbine extracts the energy from the dehumidified exhaust flow.

9. The system of claim 8, wherein the exhaust compressor includes a compressor shaft configured to receive the compressor power, and wherein the turbine includes a turbine shaft configured to provide the portion of the compressor power to the compressor shaft.

10. The system of any of claims 1-9, further comprising a water distribution system configured to supply at least a portion of the water extracted by the extractor to the inlet feed.

11. The system of any of claims 1-10, further comprising an inlet compressor configured to receive the inlet feed at a first pressure and compress the inlet feed to a second pressure greater than the first pressure, wherein the inlet compressor is configured to compress the inlet feed prior to the fuel cell inlet receiving the inlet feed.

12. The system of any of claims 1-11, wherein the fuel cell assembly defines a cathode side and an anode side, and wherein the fuel cell assembly is configured to generate a cathode exhaust at the fuel cell outlet when the inlet feed comprises the oxidizing agent, the cathode side receives the inlet feed, and the anode side receives the fuel, and wherein the exhaust flow is at least a portion of the cathode exhaust.

13. The system of any of claims 1-12, wherein the extractor is configured to extract at least 50% of a water content from the cooled exhaust flow when the extractor receives the cooled exhaust flow, wherein the water content is a mass of water per a volume of cooled exhaust flow.

14. A method comprising:
receiving, by a fuel cell assembly, an inlet feed at a fuel cell inlet, wherein the inlet feed comprises one of an oxidizing agent or a fuel, and wherein the fuel cell assembly is configured to oxidize the fuel using the oxidizing agent;
discharging, by the fuel cell assembly, an exhaust flow at a fuel cell outlet fluidically coupled to the fuel cell inlet;
transferring heat, using a condenser, from the exhaust flow to a turbine exhaust of a turbine and discharging, from the condenser, a cooled exhaust flow comprising at least a portion of the exhaust flow;
extracting water, using an extractor, from the cooled exhaust flow and discharging a dehumidified exhaust flow comprising at least a portion of the cooled exhaust flow; and
extracting energy, using a turbine, from the dehumidified exhaust flow and discharging, from the turbine, the turbine exhaust to the condenser, wherein the turbine exhaust comprises at least a portion of the dehumidified exhaust flow.

15. The method of claim 14, further comprising compressing, using an exhaust compressor, the exhaust flow from an inlet pressure to an outlet pressure greater than the inlet pressure prior to the condenser receiving the exhaust flow.

## Amended claims

### Amended claims in accordance with Rule 137(2) EPC.

1. A system (100) comprising:
a fuel cell assembly (102) configured to receive an inlet feed at a fuel cell inlet and discharge an exhaust flow (FE) at a fuel cell outlet fluidically coupled to the fuel cell inlet, wherein the inlet feed comprises one of an oxidizing agent or a fuel, and wherein the fuel cell assembly (102) is configured to oxidize the fuel using the oxidizing agent;
a condenser (162) configured to receive the exhaust flow (FE), wherein the condenser (162) is configured to transfer heat from the exhaust flow (FE) and discharge a cooled exhaust flow (FC);
an extractor (164) configured to receive the cooled exhaust flow (FC), wherein the extractor (164) is configured to extract water from the cooled exhaust flow (FC) and discharge a dehumidified exhaust flow (FH); and
a turbine (166) configured to extract energy from the dehumidified exhaust flow (FH) and discharge a turbine exhaust (228) to the condenser (162),
wherein the condenser (162) is configured to transfer the heat from the exhaust flow (FE) to the turbine exhaust (228).

2. The system (100) of claim 1, wherein the system is configured to discharge at least some portion of the water extracted by the extractor (164) to the inlet feed.

3. The system (100) of claim 1 or claim 2, wherein the fuel cell assembly (102) is configured to generate at least a portion of the water extracted by the extractor (164) when the fuel cell assembly (102) receives the inlet feed and the fuel cell assembly (102) receives a fuel.

4. The system (100) of any of claims 1-3, further comprising a reheater (170), wherein the reheater (170) is configured to transfer heat from the exhaust flow (FE) prior to the condenser (162) transferring heat from the exhaust flow.

5. The system (100) of claim 4, wherein the reheater (170) is configured to receive the dehumidified exhaust flow (FH) prior to the turbine (166) extracting energy from the dehumidified exhaust flow, and wherein the reheater (170) is configured to transfer the heat from the exhaust flow (FE) to the dehumidified exhaust flow (FH).

6. The system (100) of any of claims 1-5, further comprising an intercooler (168) configured to transfer heat from the exhaust flow (FE) prior to the condenser (162) transferring heat from the exhaust flow.

7. The system (100) of any of claims 1-6, further comprising an exhaust compressor (160) configured to receive the exhaust flow (FE) at an inlet pressure and compress the exhaust flow to an outlet pressure greater than the inlet pressure, wherein the exhaust compressor (160) is configured to compress the exhaust flow (FE) prior to the condenser (162) receiving the exhaust flow.

8. The system (100) of any of claims 1-7, wherein the exhaust compressor (160) is configured to compress the exhaust flow using a compressor power supplied to the exhaust compressor (160), and wherein the turbine (166) is configured to provide at least a portion of the compressor power as the turbine (166) extracts the energy from the dehumidified exhaust flow (FH).

9. The system (100) of claim 8, wherein the exhaust compressor (160) includes a compressor shaft (176) configured to receive the compressor power, and wherein the turbine (166) includes a turbine shaft (167) configured to provide the portion of the compressor power to the compressor shaft (176).

10. The system (100) of any of claims 1-9, further comprising a water distribution system (126) configured to supply at least a portion of the water extracted by the extractor (164) to the inlet feed.

11. The system (100) of any of claims 1-10, further comprising an inlet compressor (113) configured to receive the inlet feed at a first pressure and compress the inlet feed to a second pressure greater than the first pressure, wherein the inlet compressor (113) is configured to compress the inlet feed prior to the fuel cell inlet receiving the inlet feed.

12. The system (100) of any of claims 1-11, wherein the fuel cell assembly (102) defines a cathode side and an anode side, and wherein the fuel cell assembly (102) is configured to generate a cathode exhaust at the fuel cell outlet when the inlet feed comprises the oxidizing agent, the cathode side receives the inlet feed, and the anode side receives the fuel, and wherein the exhaust flow is at least a portion of the cathode exhaust.

13. The system (100) of any of claims 1-12, wherein the extractor (164) is configured to extract at least 50% of a water content from the cooled exhaust flow (FC) when the extractor (164) receives the cooled exhaust flow, wherein the water content is a mass of water per a volume of cooled exhaust flow (FC).

14. A method comprising:
receiving, by a fuel cell assembly (102), an inlet feed at a fuel cell inlet, wherein the inlet feed comprises one of an oxidizing agent or a fuel, and wherein the fuel cell assembly (102) is configured to oxidize the fuel using the oxidizing agent;
discharging, by the fuel cell assembly (102), an exhaust flow (FE) at a fuel cell outlet fluidically coupled to the fuel cell inlet;
transferring heat, using a condenser (162), from the exhaust flow (FE) to a turbine exhaust (228) of a turbine (166) and discharging, from the condenser (162), a cooled exhaust flow (FC) comprising at least a portion of the exhaust flow;
extracting water, using an extractor (164), from the cooled exhaust flow (FC) and discharging a dehumidified exhaust flow (FH) comprising at least a portion of the cooled exhaust flow (FC); and
extracting energy, using a turbine (166), from the dehumidified exhaust flow (FH) and discharging, from the turbine (166), the turbine exhaust (228) to the condenser (162), wherein the turbine exhaust comprises at least a portion of the dehumidified exhaust flow (FH).

15. The method of claim 14, further comprising compressing, using an exhaust compressor (160), the exhaust flow from an inlet pressure to an outlet pressure greater than the inlet pressure prior to the condenser (162) receiving the exhaust flow.
